# EUROPEAN PATENT APPLICATION

(11) **EP 0 831 596 A2**
(43) Date of publication of application: **25.03.1998**
(21) Application number: 97115447.1
(22) Date of filing: 06.09.1997
(51) Int. Cl.: H04B 1/66

(54) **Method and circuit arrangement for coding or decoding audio signals**

(30) Priority: 20.09.1996 DE 19638546
(71) Applicant: DEUTSCHE THOMSON-BRANDT GMBH, 78048 Villingen-Schwenningen (DE)
(72) Inventor: Schröder, Ernst F., 30655 Hannover (DE); Spille, Jens, 30966 Hemmingen (DE)
(74) Representative: Hartnack, Wolfgang, Dipl.-Ing.

(57) **Abstract**

In audio source coding, knowledge from the field of psycho-acoustics is utilized in order to reduce the data rate. The characteristic properties of psycho-acoustics are highly dependent on the sound pressure level of the signal. A specific audible loudness is therefore normally assumed. This can lead to an impairment of the signal quality if the signal is subsequently intensively processed. Thus, the quantization noise N can become perceptible if, on the receiver side, the signal S is enhanced with the aid of a dynamic compression circuit VCA1, or if a signal compression VCA2 is carried out before the coding ENC2 and a signal expansion VCA3 is carried out after the decoding DEC2. In order to avoid this impairment of the signal, the psycho-acoustic characteristic values which are relevant to the coding and decoding are selected as a function of the audible loudness resulting from the dynamic compression and possible dynamic expansion.

## Description

The invention relates to a method and a circuit arrangement for coding or decoding audio signals, psycho-acoustic effects being utilized and dynamic compression being performed.

### Prior art

In audio source coding, knowledge about human hearing which has been gained from the field of psycho-acoustics is utilized in order to reduce the data rate. In this case, the redundancy and irrelevance contained in the audio signal, that is to say the information which is superfluous or not perceptible in this context, is utilized in particular. During the irrelevance reduction, on the one hand irrelevant signal components are not coded and hence not transmitted. On the other hand, distortions which are produced by slight quantization are tolerated if they are not registered by the hearing because of masking effects. Masking is understood here to mean a psycho-acoustic behaviour of the hearing in which a sound with a low sound level is masked by an adjacent sound with a high sound level. This can be utilized for data reduction, in that the masked signal components are separated from those components which are significant for the human hearing impression. The coding then takes into account only those components which are relevant for hearing. However, the coding of the signals above the audibility threshold can then be carried out using low quantization, so that the quantization noise which is produced still lies below the audibility threshold.

Masking is utilized, for example, in the MUSICAM method. In the case of MUSICAM, the audio signal is split up into 32 partial bands, the audibility threshold being calculated for each partial band. In this case, both the masking is taken into account and a resulting quantization noise is determined from the quiescent hearing threshold.

### Invention

The invention is based on the object of specifying a method to improve the signal quality in the reproduction of audio signals. This object is achieved by the method specified in Claim 1.

The invention is based on the further object of specifying a circuit arrangement to apply the method according to the invention. This object is achieved by the circuit arrangements specified in Claims 4 and 7.

The characteristic properties of psycho-acoustics are highly dependent on the sound pressure level of the signal. A specific audible loudness is therefore normally assumed. This can lead to an impairment of the signal quality if the signal is subsequently intensively processed, for example using a dynamic compressor or dynamic expander.

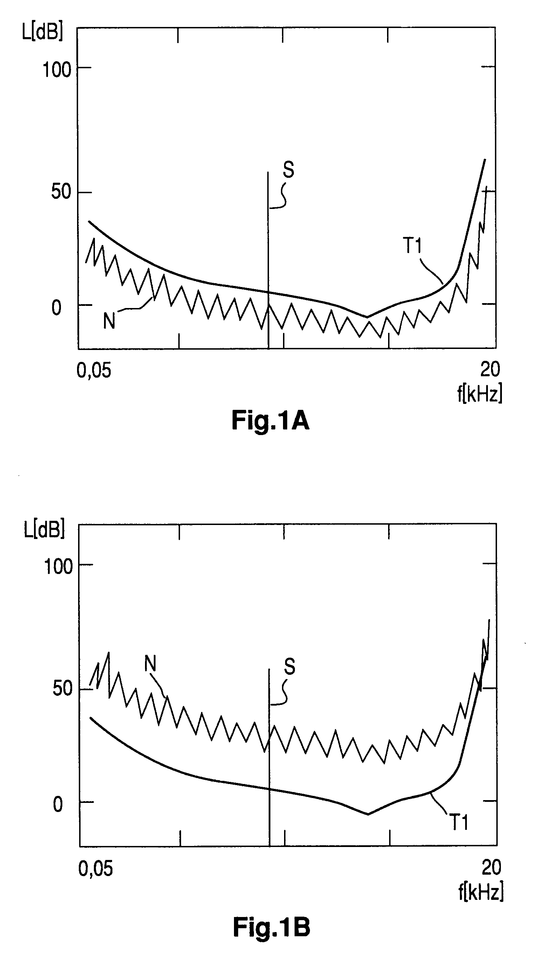

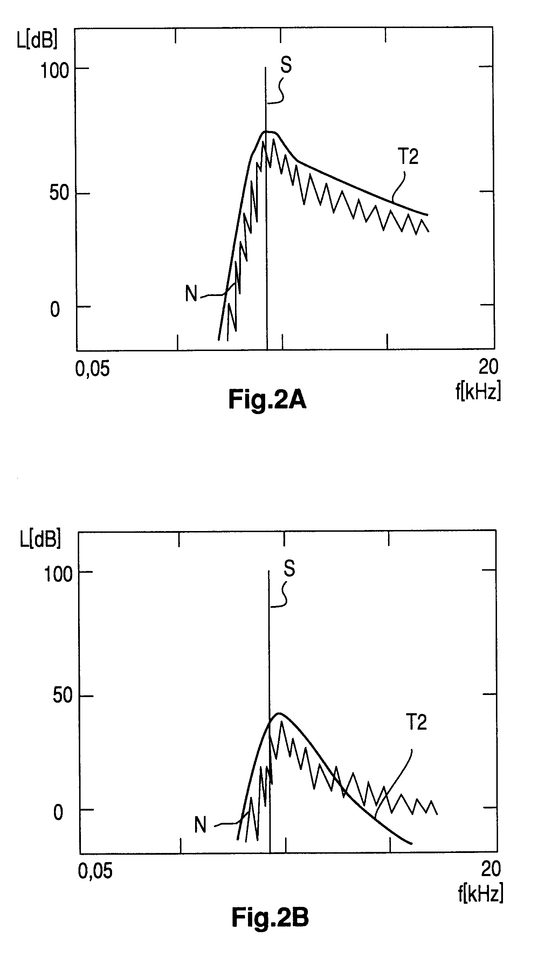

If an audio encoder according to the prior art is fed with a signal S (here a sinusoidal signal) of low loudness (e.g. 60 dB) for coding, then the quantization noise N is set such that the latter lies somewhat below the quiescent hearing threshold T1 of about 0 dB (see Fig. 1A). If, on the receiver side at the output of the decoder, the signal S is then enhanced by 15 dB, for example, with the aid of a dynamic compression circuit, then the quantization noise N becomes perceptible, as illustrated in Fig. 1B. If, on the other hand, an audio signal is compressed in the studio before coding and subsequently expanded once more on the receiver side, then the dependence of the masking curve on the loudness leads to an impairment of the signal. As illustrated in Fig. 2, the masking curve T2 changes its slope as a function of the loudness. Thus, it is flatter, in the higher-frequency range, for high loudnesses (see Fig. 2A) than for low loudnesses (see Fig. 2B), that is to say the human ear is more sensitive to high sounds at low loudnesses than at high loudnesses. If a compressed, loud signal S is coded, then it is possible to permit a comparatively high quantization noise N. However, if this signal is expanded after the decoding, then the actual masking curve in the human ear becomes significantly steeper, and the quantization noise becomes perceptible as a result. In order to avoid this impairment of the signal, it would indeed be possible, in general, to proceed from a quiescent hearing threshold with a distinctly lower level or from a distinctly lower sound pressure, but this would lead to a distinctly higher data rate.

In principle, therefore, the method according to the invention for coding and decoding audio signals, in which psycho-acoustic effects are utilized and dynamic compression is performed, consists in the fact that, during the coding, a psycho-acoustic characteristic value or a plurality of psycho-acoustic characteristic values is or are selected as a function of the dynamic compression, and that the decoding is carried out using these characteristic values.

On the decoder side, the dynamic compression is advantageously performed after the decoding. The psycho-acoustic characteristic value is then preferably the level of the quiescent hearing threshold.

It is likewise advantageous, on the decoder side, to perform dynamic expansion of the signals compressed on the encoder side. The psycho-acoustic characteristic value is then preferably the slope of the masking curve.

In principle, the circuit arrangement according to the invention for encoding comprises an encoder for coding audio signals, in which encoder psycho-acoustic effects are utilized, and a unit for obtaining a compression factor which is used for a dynamic compression of the audio signals, the encoder being fed, by the unit for obtaining the compression factor, with a compression-factor signal on which a psycho-acoustic characteristic value in the coding in the encoder depends.

Preferably, the compression-factor signal contains information about the current loudness level and/or about the current compression factor.

Advantageously, the audio signal is fed to the unit for obtaining the compression factor and the compression-factor signal is additionally fed to a dynamic compressor which compresses the audio signal before the coding, the compressed audio signal then being fed to the audio encoder.

In principle, the circuit arrangement according to the invention for decoding comprises a decoder for decoding audio signals which were coded utilizing psycho-acoustic effects, and a unit for changing the dynamic range of the audio signal, the unit for changing the dynamic range being fed a compression-factor signal on which a psycho-acoustic characteristic value in the coding in the encoder depended, the change in the dynamic range on the decoder side being a function of the compression-factor signal supplied.

It is advantageous here if a unit for obtaining the compression factor is fed with the decoded audio signals, and a compression-factor signal generated by this unit is fed to the unit for changing the dynamic range, the latter unit performing dynamic compression of the decoded audio signals.

It is likewise advantageous if a compression-factor signal generated on the encoder side is fed to the unit for changing the dynamic range, the latter unit performing dynamic expansion of the audio signals compressed on the encoder side.

### Drawings

Exemplary embodiments of the invention are described using the drawings, in which:
- Fig. 1: shows an audio signal after decoding, with the masking threshold and quantization noise, before (A) and after (B) dynamic expansion;
- Fig. 2: shows an audio signal after decoding, with the quiescent hearing threshold and quantization noise, before (A) and after (B) dynamic compression;
- Fig. 3: shows the method according to the invention using a dynamic compressor;
- Fig. 4: shows the method according to the invention using a dynamic expander.

### Exemplary embodiments

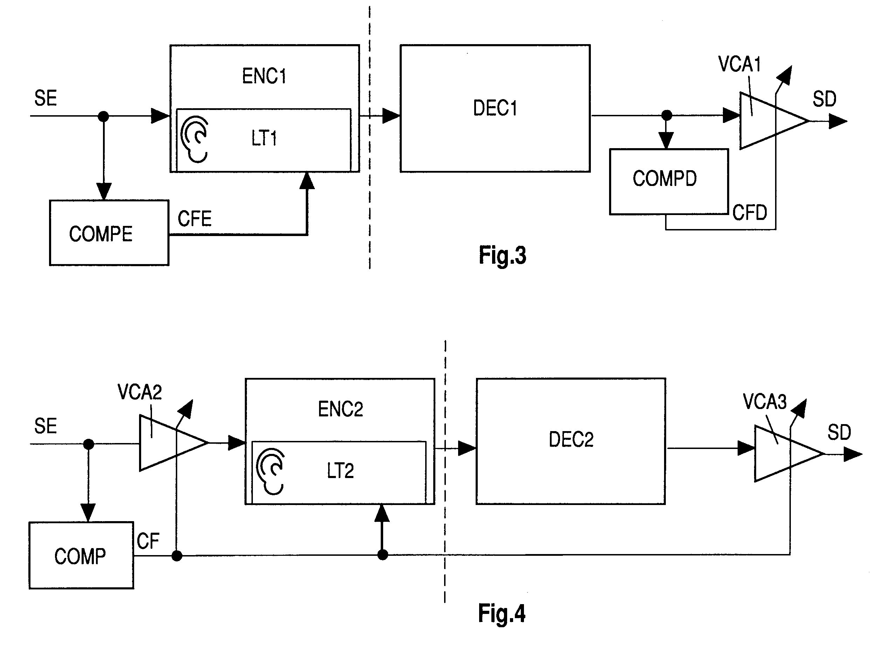

The method according to the invention with dynamic compression on the receiver side is illustrated in Fig. 3. Such a method is of interest, in particular, in the reproduction of audio signals by simple reproduction devices or car radios. In such cases, the restricted processable dynamic range or ambient noise makes it expedient to enhance quiet signal components of the audio signal in order to make these audible. For this, the audio signal SE is first fed on the transmitter side to a unit COMP for obtaining a compression factor and to the actual audio encoder ENC1. The coding of the audio signals SE is then carried out in the audio encoder ENC1, taking into account the psycho-acoustic effects described above. In addition, the encoder contains a separate input LT1, via which the encoder is fed, by the unit COMPE for obtaining the compression factor, with information about the current loudness level, in order to determine the current quiescent hearing threshold. The coded signal is then transmitted and, on the receiver side, decoded once more by the audio decoder DEC1, this decoder containing the reciprocal functions of the coder. The decoded signal is then compressed by the compressor VCA1, the compressor being fed with the compression factor by the unit COMPD for obtaining the compression factor. As a result, the compressed audio signal SD is, finally, available.

That method according to the invention in which dynamic expansion is carried out on the receiver side is illustrated in Fig. 4. In this case, in order to improve the signal reproduction, the dynamic compression is already carried out on the encoder or transmitter side. Whereas simple receivers then only reproduce the compressed signal, a hi-fi receiver carries out an expansion of the compressed signal, with the result that the audio signal can then be reproduced over the complete dynamic range. Here too, the audio signal SE is first fed to a unit COMP for obtaining the compression factor. The compression factor determined is then fed to the compressor VCA2, which compresses the audio signals SE before the coding. The compressed signal is then fed to the audio encoder ENC2, to which the compression factor is also fed via the input LT2, in order to have a measure of the current loudness level. This makes it possible, depending on the loudness, to select the masking threshold curve which is optimal in each case. The audio signal is then appropriately coded and recorded or transmitted together with the compression factor. In the case of a broadcast transmission, the compression factor can either be transmitted jointly with other radio data, with the aid of an additional data channel, for example in accordance with the European RDS or American RBDS standard, or can be inserted inaudibly into the actual audio signal. The latter provides the advantage that the compression factors are always transmitted synchronously with the sound signal, so that these compressin factors are also still available following a sound recording. For the purpose of reproduction, an expansion by the dynamic expander VCA3 is then carried out after the decoding of the transmitted audio signal by the audio decoder DEC2, the said dynamic expander being fed with the transmitted compression factor for this purpose. The expanded audio signal SD is thus available for further processing or reproduction.

The invention can be used for the transmission of digital audio signals by transmission systems such as, for example, DAB or ADR, but also for the recording and reproduction of digital audio signals by, for example, DVD or DVC devices.

## Claims

1. Method for coding or decoding audio signals, in which psycho-acoustic effects are utilized and dynamic compression is performed, characterized in that, during the coding, a psycho-acoustic characteristic value or a plurality of psycho-acoustic characteristic values (T1, T2) is or are selected as a function of the dynamic compression, and in that the decoding can be carried out using these characteristic values.

2. Method according to Claim 1, characterized in that, on the decoder side, the dynamic compression is performed after the decoding.

3. Method according to Claim 1 or 2, characterized in that the psycho-acoustic characteristic value is the level of the quiescent hearing threshold (T1).

4. Method according to Claim 1, characterized in that, on the encoder side, the dynamic compression is carried out before the coding, and dynamic expansion is carried out after the decoding.

5. Method according to Claim 1 or 4, characterized in that the psycho-acoustic characteristic value is the slope of the masking curve (T2).

6. Circuit arrangement having an encoder (ENC1, ENC2) for coding audio signals (SE), in which encoder psycho-acoustic effects are utilized, and having a unit (COMP, COMPE) for obtaining a compression factor which is used for a dynamic compression of the audio signals on the encoder or decoder side, characterized in that the encoder is fed, by the unit for obtaining the compression factor, with a compression-factor signal (CF, CFE) on which a psycho-acoustic characteristic value in the coding in the encoder depends.

7. Circuit arrangement according to Claim 6, characterized in that the compression-factor signal (CF, CFE) contains information about the current loudness level and/or about the current compression factor.

8. Circuit arrangement according to Claim 6 or 7, characterized in that the audio signal (SE) is fed to the unit (COMP, COMPE) for obtaining the compression factor, the compression-factor signal (CF) determined from the audio signal being additionally fed to a dynamic compressor (VCA2) which compresses the audio signal (SE) before the coding, the compressed audio signal then being fed to the audio encoder (ENC2).

9. Circuit arrangement having a decoder (DEC1, DEC2) for decoding audio signals which have been coded utilizing psycho-acoustic effects, and having a unit (VCA1, VCA3) for changing the dynamic range of the audio signal, characterized in that the unit for changing the dynamic range is fed with a compression-factor signal (CF, CFD) on which a psycho-acoustic characteristic value in the coding in the encoder depended, the change in the dynamic range on the decoder side being a function of the compression-factor signal supplied.

10. Circuit arrangement according to Claim 9, characterized in that a unit (COMPD) for obtaining the compression factor is fed with the decoded audio signals, and a compression-factor signal (CFD) generated by this unit is fed to the unit (VCA1) for changing the dynamic range, the latter unit performing dynamic compression of the decoded audio signals.

11. Circuit arrangement according to Claim 9, characterized in that a compression-factor signal (CF) generated on the encoder side is fed to the unit (VCA3) for changing the dynamic range, the latter unit performing dynamic expansion of the audio signals compressed on the encoder side.
